# EUROPÄISCHE PATENTANMELDUNG

(11) **EP 3 611 484 A1**
(43) Veröffentlichungstag der Anmeldung: **19.02.2020**
(21) Anmeldenummer: 18189432.0
(22) Anmeldetag: 17.08.2018
(51) Int. Cl.: G01J 3/10, G01J 3/44, G01J 3/02, G01J 3/12

(54) **VORRICHTUNG ZUR LICHTBEREITSTELLUNG ZUR KOHÄRENTEN ANTI-STOKES RAMAN- SPEKTROSKOPIE**

(71) Anmelder: Justus-Liebig-Universität Gießen, 35390 Gießen (DE)
(72) Erfinder: Chatterjee, Sangam, 35037 Marburg (DE); Klar, Peter, 35392 Gießen (DE); Weinhold, Marcel, 35418 Buseck (DE)
(74) Vertreter: Stumpf, Peter

(57) **Zusammenfassung**

Die Erfindung betrifft eine Vorrichtung A für eine Lichtquelle zur kohärenten Anti-Stokes Raman-Spektroskopie mit einer Lichtquelle 1 zur Emission eines Primärstrahls mit einer fundamentalen Wellenlänge λ₀.

Diese umfasst weiterhin eine Photonische-Kristall-Faser 2, welche so ausgebildet ist, dass sie zur Generation des Superkontinuums aus dem Primärstrahl und zur Transmission der fundamentalen Wellenlänge λ₀ verwendet werden kann.

Diese umfasst weiterhin eine Kombination optischer Elemente 4, die so ausgebildet ist, dass sie das aus der Photonische-Kristall-Faser austretende Laserlicht unter Beibehaltung der zeitlichen und räumlichen Kohärenz kollimieren und den Teil des Emissionsspektrums des aus der Photonische-Kristall-Faser 2 austretenden Sekundärstrahl 3, dessen Wellenlängen kürzer als die der fundamentalen Wellenlänge des Primärstrahls λ₀ sind, entfernen, so dass ein kollimierter Tertiärstrahl 5 entsteht, der eine kohärente Überlagerung von Laserlicht bei der fundamentalen Wellenlänge λ₀ mit dem langwelligeren Anteil (λ > λ₀) des Superkontinuums bzw. weißen Laserlichts ist und der spektral in Intensität und Polarisation so geformt ist, dass er für die Anregung von CARS-Prozessen in Messapparaturen geeignet ist.

## Beschreibung

Die vorliegende Erfindung betrifft eine Vorrichtung zur Lichtbereitstellung zur kohärenten Anti-Stokes Raman-Spektroskopie (CARS).

### Beschreibung und Einleitung des allgemeinen Gebietes der Erfindung

Unter Raman-Spektroskopie versteht man die spektroskopische Untersuchung der inelastischen Streuung von Licht an Molekülen oder Festkörpern (Raman-Streuung).

### Stand der Technik

Raman-Spektroskopie ist u.a. ein Standardverfahren zur chemischen und strukturellen Analyse, die bei der Untersuchung von Festkörpern, Fluiden und Gasen Anwendung findet. Hierbei kommt es z.B. im Falle von biologischen oder halbleitenden Proben oftmals zu einer starken Fluoreszenz. Diese wird spektral bei kleineren Energien (größeren Wellenlängen) als der des Anregungslasers beobachtet. Sie überlagert damit das Stokes Raman-Spektrum und verhindert so oder erschwert zumindest signifikant dessen sinnvolle Auswertung.

Dieses Problem kann umgangen werden, indem man das Anti-Stokes Raman-Spektrum analysiert. Es liegt energetisch oberhalb (bei kleineren Wellenlängen) im Vergleich zur Energie (Wellenlänge) des Anregungslasers. Die Signalstärke des Anti-Stokes Spektrums ist in der Regel deutlich geringer als die des Stokes-Spektrums, da bei Raumtemperatur die Schwingungszustände nur schwach angeregt sind. Dies führt zu langen Messzeiten bzw. einem schlechten Signal-zu-Rausch-Verhältnis.

Eine Lösung bietet die kohärente Anti-Stokes Raman-Spektroskopie (CARS coherent anti-Stokes Raman spectroscopy). Hierbei verwendet man zusätzlich zum schmalbandigen Anregungslaser einen zweiten entweder spektral breiten oder durchstimmbaren Laser, um Schwingungszustände im Zusammenspiel der beiden Laserstrahlen möglichst resonant anzuregen. Dadurch wird die Amplitude des Anti-Stokes Spektrums derart verstärkt, dass Spektren in einer realisierbaren Messzeit detektiert werden können.

Bei CARS handelt es sich um ein Vierwellen-Mischungsverfahren. Beim CARS werden im Allgemeinen ein Pumpstrahl (Anregungslaser) mit der Frequenz ωₚ und ein Stokes-Strahl mit Frequenz ωₛ überlagert und die zu untersuchende Probe damit bestrahlt. Sofern die Frequenzen der beiden Teilstrahlen derart gewählt werden, dass die Differenz der Frequenzen *ωₚ* - *ωₛ* gerade der Frequenz einer Schwingungsmode der Probe *ω_{vib}* (*ωₚ* - *ωₛ* = *ω_{vib}*) entspricht, kann diese resonant angeregt werden, was die Besetzung dieser Schwingungsmode verändert. Die geänderte Besetzung der Schwingungsmode kann dann mit dem Pumplaser (jetzt als Detektionslaser) der Frequenz ωₚ detektiert werden. Ein gewisser Anteil des Detektionslaserlichts wird dabei bezüglich seiner Frequenz modifiziert, so dass gilt *ω_{CARS}* = *ωₚ* + *ωₚ* - *ωₛ* = *ωₚ* + *ω_{vib}.* Die Frequenz des CARS-Signals entspricht somit der Frequenz der Anti-Stokes Streuung der Schwingungsmode. Die CARS-Techniken liefern eine Intensitätssteigerung um einen Faktor von ungefähr 10⁵, was Wirkungsquerschnitte im Bereich von 10⁻²⁵ cm²/Molekül ergibt. Alternativ kann statt eines spektral durchstimmbaren Stokes-Strahls ein spektral breiter Stokes-Strahl wie von einem Weißlichtlaser eingesetzt werden. In dem Fall werden die detektierbaren Schwingungsmoden ω*_{vib,1}* bis ω*_{vib,n}* alle gleichzeitig resonant getrieben.

Systeme zur kohärenten Anti-Stokes Raman-Spektroskopie mit Weißlicht sind bekannt. Zwei Laserstrahlen, Pump- und Stokes-Strahl, werden im Raman-Medium überlagert. Durch die Wechselwirkung der Photonen mit den Atomen der Probe entsteht dabei ein laser-ähnlicher Ausgangsstrahl der als Detektionsstrahl dient. Der ausgesendete Strahl wird genau dann resonant verstärkt, wenn die Schwebung aus der Überlagerung der Frequenzen des Pump- und Stokes-Lasers der Frequenz einer Schwingungsmode des Raman-Mediums entspricht. Bei einem gewissen Anteil des Detektionslaserlichts wird dadurch die Frequenz um die Frequenz der Schwingungs-Resonanz zu höheren Frequenzen hin verschoben. Diese Strahlen des Detektionslaserlichts geänderter Frequenz werden Anti-Stokes-Strahlen genannt.

Um einen kohärenten Detektionsstrahl zu erhalten, werden derzeitig komplexe Optiken und Aufbauten verwendet, um die für den CARS-Prozess nötige räumliche und zeitliche Überlagerung der involvierten Teilstrahlen zu erzielen.

Die zusätzlichen Optiken führen neben einem deutlich ausgedehnteren Aufbau und entsprechend höheren Kosten auch zu einer aufwendigen Justage, um die Kohärenz der beiden Teilstrahlen sicherzustellen. Ein Dejustieren im Betrieb ist nicht ausgeschlossen und Nachjustieren oft nötig. Da die Justage außerdem nach jedem Probenwechsel erneut angepasst werden muss, handelt es sich bei dem bisherigen Konzept nicht um eine Plug-and-Play Lösung, wie sie für industrielle Anwendungen gefordert wird. Bei der bisherigen Lösung ist das geringe Verhältnis von Messzeiten zu Justagezeiten ungeeignet für einen hohen Probendurchsatz und eine routinemäßige Anwendung.

### Aufgabe

Aufgabe der vorliegenden Erfindung ist es, eine Vorrichtung zur Lichtbereitstellung zur kohärenten Anti-Stokes Raman-Spektroskopie (CARS) mit einer Lichtquelle, einer kompakten und einfach justierbaren Optik zur Strahlführung und Strahlmanipulation bereitzustellen.

### Lösung der Aufgabe

Die Aufgabe wird durch eine Vorrichtung für eine Lichtquelle mit den Merkmalen des Hauptanspruchs gelöst. Vorteilhafte Weiterbildungen der Erfindung sind in den Unteransprüchen beschrieben.

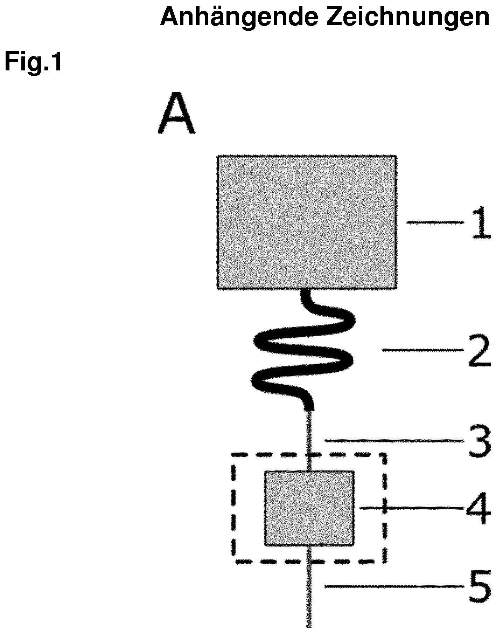

Die erfindungsgemäße Vorrichtung A (siehe Abbildung Fig. 1) zur Lichtbereitstellung zur kohärenten Anti-Stokes Raman-Spektroskopie umfasst zunächst genau eine Lichtquelle 1, welche so ausgebildet ist, dass sie einen Primärstrahl mit einer fundamentalen (Zentral-)Wellenlänge λ₀ emittieren kann. Die Lichtquelle 1 ist bevorzugt als Laser ausgebildet. Die fundamentale (Zentral-) Wellenlänge (λ₀) der Lichtquelle 1 ist prinzipiell spektral frei wählbar. Eine obere Grenze für die Wellenlänge λ₀ ist dadurch gegeben, dass die zugehörige Frequenz ω*ₚ* der Laserphotonen größer sein muss als die größte zu detektierende Frequenz ω*_{vib,max}* der Schwingungsmoden der zu untersuchenden Probe. Für eine optimale Auflösung der CARS-Signale sollte die Linienbreite des Lasers 1 kleiner sein als die Linienbreiten der zu detektierenden Schwingungsmoden, typischerweise kleiner 100 cm⁻¹. Günstig sind Linienbreiten des Lasers von etwa 10 cm⁻¹. Der Laser kann sowohl ein Dauerstrichlaser als auch ein gepulster Laser sein.

Die fundamentale Wellenlänge λ₀ liegt dabei bevorzugt im sichtbaren oder nahen infraroten Wellenlängenbereich (sichtbares Licht zwischen 380 nm bis 780 nm Wellenlänge oder Infrarot zwischen 780 nm und 5 µm Wellenlänge). Eine häufig genutzte Wellenlänge ist bspw. 785 nm, da für diese Wellenlänge Halbleiterlaser für kommerzielle Anwendungen wie Lichtschranken, Scanner etc. kostengünstig kommerziell hergestellt werden. Dadurch ist es möglich, das zu erhaltende Anti-Stokes Spektrum in einen Spektralbereich zu verschieben, für den kostengünstige, empfindliche Vielkanal-Detektoren zur Verfügung stehen (bspw. 190 - 1000 nm Silicium-CCD; 800 -1600 nm InGaAs-Vielkanal-Detektoren; 1200 - 2100 nm enhanced InGaAs-Vielkanal-Detektoren). Es handelt sich bei der Lichtquelle 1 bevorzugt um einen gepulsten Laser, da damit die für die erfindungsmäße Vorrichtung A nötigen elektrischen Feldstärken pulsweise leichter realisiert werden können.

Die erfindungsmäße Vorrichtung A zur Lichtbereitstellung zur kohärenten Anti-Stokes Raman-Spektroskopie umfasst damit nur eine Lichtquelle 1, die sowohl den Pump-Strahl zur Verfügung stellt als auch zur Generation des Stokes-Strahls dient.

Weiterhin umfasst die erfindungsmäße Vorrichtung A eine Photonische-Kristall-Faser (PCF photonic crystal fibre) 2. Die Photonische-Kristall-Faser 2 ist so ausgebildet, dass der Primärstrahl diese passieren kann und ein Sekundärstrahl 3 emittiert wird. Weiterhin ist die Photonische-Kristall-Faser 2 so ausgebildet, dass das Spektrum des Primärstrahls, beim Passieren der Photonische-Kristall-Faser 2 so modifiziert wird, dass es zu einer Aufweitung des Spektrums des Primärstrahl kommt und ein Superkontinuum bzw. weißes Laserlicht entsteht. Dabei kann der Sekundärstrahl 3 bei der fundamentalen Wellenlänge intrinsisch zeitlich und räumlich kohärent das Licht des Primärstrahls überlagern und so nach weiterer spektraler Formung mit Hilfe von optischen Elementen 4 als Anregungslicht für CARS-Prozesse ausgekoppelt werden.

Photonische Kristalle umfassen Photonische-Kristall-Fasern. Photonische Kristalle basieren auf natürlich in transparenten Festkörpern vorkommenden oder künstlich erzeugten periodischen und/oder nicht periodischen Modulationen im Brechungsindex, die u. a. durch Beugung, Brechung und Interferenz die Ausbreitung von Licht (in der Regel sichtbares Licht zwischen 380 nm bis 780 nm Wellenlänge oder Infrarot zwischen 780 nm und 5 µm Wellenlänge) beeinflussen. Dadurch wird es möglich, Licht auf Abmessungen, welche in der Größenordnung der Wellenlänge liegen, zu führen, zu filtern und wellenlängenselektiv zu reflektieren. Photonische Kristalle sind nicht zwingend kristalline Materialien - die Bezeichnung ist aufgrund der Analogie der Beugungs- und Reflexionseffekten des Lichts zu denen von Röntgenstrahlung in Kristallen gewählt worden. Im Falle der Photonischen Kristalle muss der Brechungsindex räumlich periodisch moduliert sein, während für kristalline Materialien die Anordnung der Atome räumlich periodisch sein muss. Es kann sich also bei Photonischen Kristallen auch um entsprechend strukturierte amorphe Materialien handeln.

Die Periode der Brechungsindexmodulation in Photonischen Kristallen ist etwa gleich einem oder größer als ein Viertel der Wellenlänge des zu manipulierenden Lichts. Für sichtbares Licht und Infrarot sind die Perioden also im Bereich von Bruchteilen eines Mikrometers bis zu mehreren Mikrometern. Photonische Kristalle können ein-, zwei- oder dreidimensional sein, d. h. weisen periodische Brechungsindexvariationen in einer, zwei bzw. allen der Raumrichtungen auf. Bragg-Spiegel sind eindimensionale Photonische Kristalle, Photonische-Kristall-Fasern sind zweidimensionale Photonische Kristalle. Analog zur Ausbildung der elektronischen Bandstruktur in ein-, zwei- oder dreidimensionalen kristallinen Strukturen (z. B. Halbleiterstrukturen) entsteht in Photonischen Kristallen eine Photonische Bandstruktur, die Bereiche verbotener Energie aufweisen kann, in denen sich elektromagnetische Wellen nicht innerhalb des Kristalls ausbreiten können (Photonische Bandlücken). Photonische Kristalle können also in gewisser Weise als das optische Analogon zu elektronischen Halbleitern, also als "optische Halbleiter" angesehen werden.

Weiterhin umfasst die erfindungsmäße Vorrichtung A eine Kombination optischer Elemente 4, welche so ausgebildet ist, dass sie den aus der Photonische-Kristall-Faser 2 austretenden Sekundärstrahl 3 unter Beibehaltung seiner intrinsischen zeitlichen und räumlichen Kohärenz so kollimiert und so spektral in Intensität und Polaridation formen kann, dass ein Tertiärstrahl 5 resultieren kann. Dieser Tertiärstrahl 5 ist eine Überlagerung von Laserlicht bei der fundamentalen Wellenlänge λ₀ mit dem langwelligeren Anteil (λ > λ₀) des Superkontinuums bzw. weißen Laserlichts und ist so für die Anregung von CARS-Prozessen geeignet.

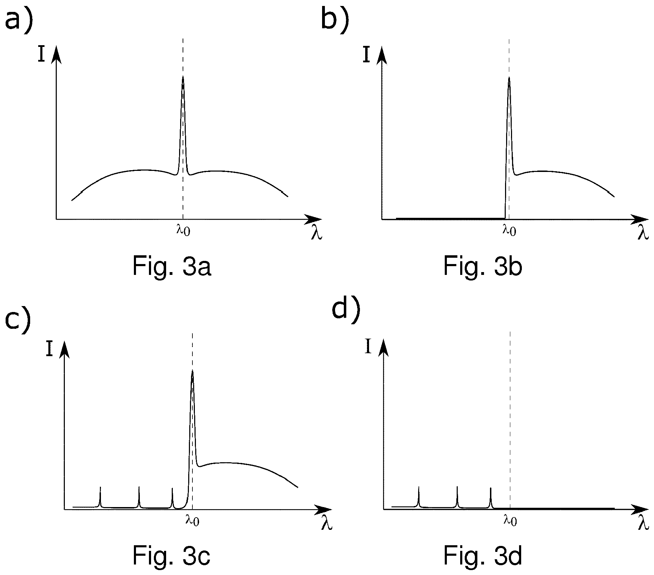

Die Arbeitsweise ist dabei folgende: Zunächst erzeugt die Lichtquelle 1 einen monochromatischen Primärstrahl mit der fundamentalen Wellenlänge λ₀ Anschließend wird der Primärstrahl durch eine Photonische-Kristall-Faser 2 geleitet, wodurch ein gewisser Anteil des Primärstrahls durch nichtlineare Effekte innerhalb dieser Photonische-Kristall-Faser 2 bezüglich seiner Wellenlänge derart modifiziert wird, dass es zur Ausbildung eines Superkontinuums (Weißlicht) kommt. Aus der Photonische-Kristall-Faser 2 tritt somit ein intrinsisch räumlich und zeitlich kohärenter Laserstrahl aus, der neben der noch immer intensiven fundamentalen Wellenlänge λ₀ ebenfalls ein spektral breites Wellenlängenspektrum umfasst (vgl. Abbildung Fig. 3a), dessen Eigenschaften im langwelligen Teil des Spektrums (λ > λ₀) denen eines Stokes-Strahls entsprechen. Der aus der Photonische-Kristall-Faser 2 austretende Laserstrahl stellt also schon eine kohärente Überlagerung von Pump- und Stokes-Strahl dar. Mit Hilfe einer Kombination optischer Elemente 4 ist es möglich, das aus der Photonische-Kristall-Faser 2 austretende Licht 3 in seiner spektralen Form (Abbildung Fig. 3a) in den kollimierten Tertiärstrahl 5 der spektralen Form (Fig. 3b) unter Erhalt der intrinsischen zeitlichen und räumlichen kohärenten Überlappung der beiden Bestandteile des aus der Photonische-Kristall-Faser 2 austretenden Lichts, Fundamentale und langwelligerer Weißlichtanteil (λ > λ₀) zu überführen und in seiner Polarisationsverteilung zu manipulieren. Bspw. ist zur spektralen Formung und Formung der Polarisationsverteilung der Einsatz von spektralen Filtern, Wellenplatten, diffraktiven oder refraktiven Elementen wie Gittern, Prismen oder Grisms (kurz für: grating prism, eine diffraktive Optik bestehend aus einem Gitter und einem Prisma) zur Wellenlängenselektion in Verbindung mit geometrischen statisch oder dynamischen Masken oder Spiegeln denkbar. Sowohl das (die) wellenlängenaufspaltende(n) als auch das (die) wellenlängenselektierende(n) Element(e) können in Reflexion oder in Transmission ausgelegt sein. Die Auslegung kann sowohl als Freistrahloptik erfolgen oder hochintegriert oder gar monolithisch realisiert sein, hier sind faserbasierte oder wellenleiterbasierte Ansätze eingeschlossen.

Somit wird kein zweiter Laser als Stokes-Lichtquelle benötigt. Aufgrund der Verzichtbarkeit des zweiten Lasers ist die Vorrichtung gegenüber bestehenden Systemen mit zwei Lasern besonders kostengünstig zu konstruieren, einfach zu handhaben und sparsam zu unterhalten. Auf eine räumliche Aufspaltung des Primärstrahls in einen Pumpstrahl und einen Teilstrahl zur Erzeugung des Stokes-Strahls, wie dies bei anderen bestehenden Systemen mit nur einem Laser der Fall ist, wird bei der erfindungsmäßigen Vorrichtung ebenfalls verzichtet. Dadurch ist ein erneutes räumliches Überlagern des Pumpstrahls und des Stokes-Strahls im weiteren Strahlengang und in der Probe nicht nötig, wodurch teure Optiken zur Justage sowie die zeitaufwändige Justage selbst entfallen.

### Ausführungsbeispiele für die Kombination optischer Elemente 4 zur Strahlführung und spektraler Formung

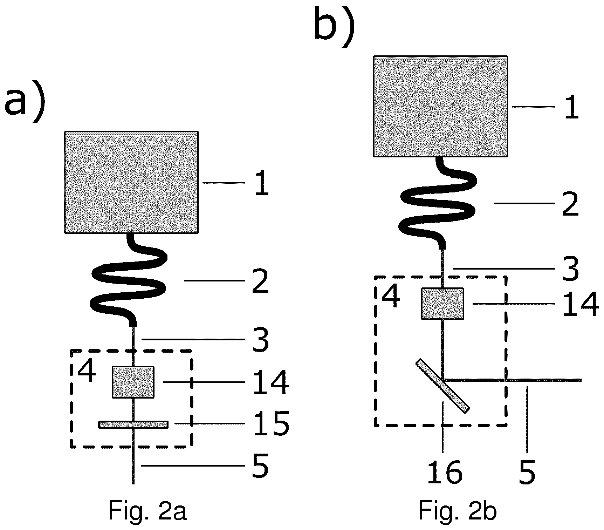

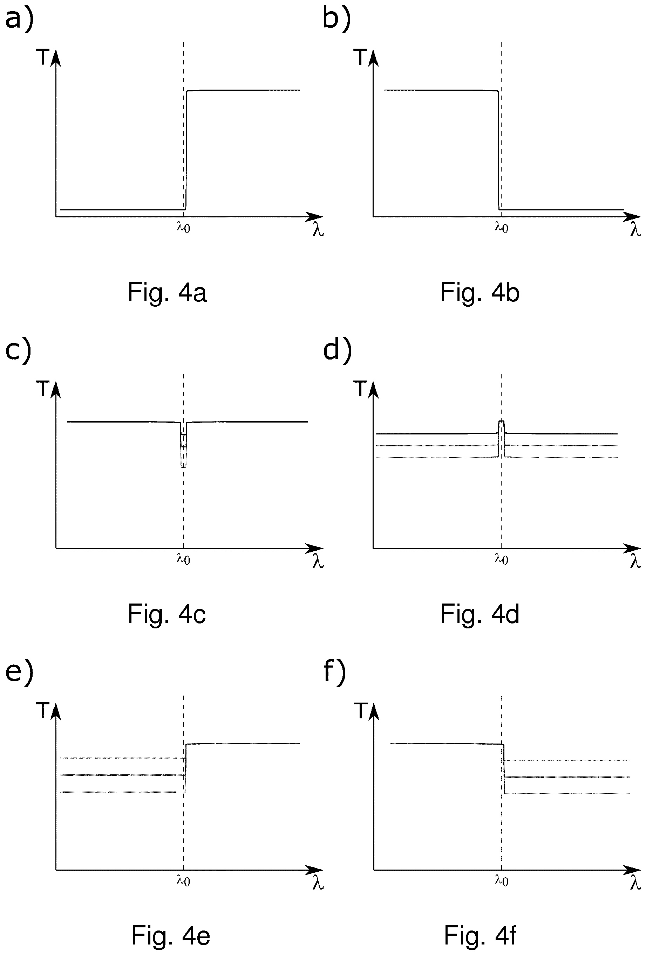

Eine mögliche Ausführung (Fig. 2a) der Lichtquelle 1 und der Photonische-Kristall-Faser 2 nachfolgenden Kombination optischer Elemente 4 innerhalb der Vorrichtung A für eine Lichtquelle zur kohärenten Anti-Stokes Raman-Spektroskopie umfasst einen Kollimator 14 zur Kollimation des aus der Photonische-Kristall-Faser 2 austretenden Sekundärstrahls 3, welcher eine spektrale Verteilung wie in Fig. 3a schematisch dargestellt aufweist, und einen spektralen Filter mit einem möglichst kleinen spektralen Übergangsbereich (typischer Weise im Bereich von <100 cm⁻¹) zwischen Wellenlängen, die transmittiert bzw. reflektiert werden. Dieser spektrale Kantenfilter ist bspw. ein Langpass-Filter 15, der so ausgewählt ist, dass nur die fundamentale Wellenlänge λ₀ und größere Wellenlängen transmittiert werden (Transmissionsverhalten wie in Fig. 4a). Somit erhält man nach Passieren des Filters einen Tertiärstrahl 5 mit einer spektralen Verteilung wie in Fig. 3b schematisch dargestellt.

Ein gängiger Kollimator ist bspw. der Thorlabs RC02FC Protected Silver Reflective Collimators. Ein gängiger Langpassfilter ist bspw. der Semrock 785nm RazorEdge® ultrasteep long-pass edge filter.

In einer anderen Ausführung (Fig. 2b) der erfindungsmäßigen Vorrichtung A zur Lichtbereitstellung zur kohärenten Anti-Stokes Raman-Spektroskopie umfasst die Kombination optischer Elemente 4 als spektralen Kantenfilter anstelle eines Langpass-Kantenfilters 15 an gleicher Position einen unter einem Einfallswinkel eingebauten Kurzpass-Kantenfilter 16 mit einem möglichst kleinen spektralen Übergangsbereich (typischer Weise im Bereich von <100 cm⁻¹) zwischen Wellenlängen, die transmittiert bzw. reflektiert werden. Dieser ist so ausgewählt, dass nur die fundamentale Wellenlänge λ₀ und größere Wellenlängen an diesem reflektiert werden (Transmissionsverhalten wie in Fig. 4b). Somit erhält man in Reflexion einen Tertiärstrahl 5 mit einer spektralen Verteilung wie in Fig. 3b schematisch dargestellt. Ein gängiger Kurzpass-Kantenfilter 16 ist bspw. der Iridian 785 US SPF.

Die Positionen von Kollimator 14 und Kantenfilter 15 bzw. 16 sind vertauschbar. Eine Kombination von Langpass-Kantenfilters 15 und Kurzpass-Kantenfilter 16 ist grundsätzlich möglich.

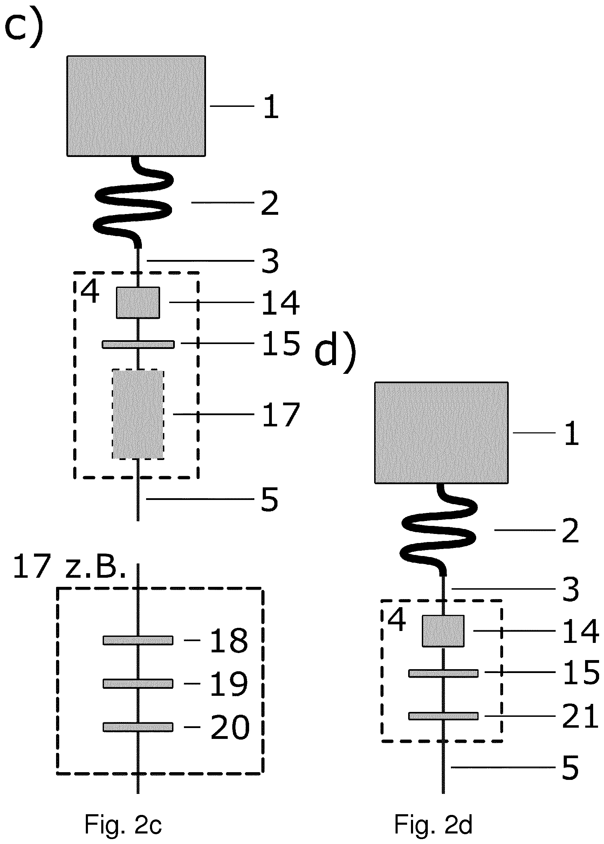

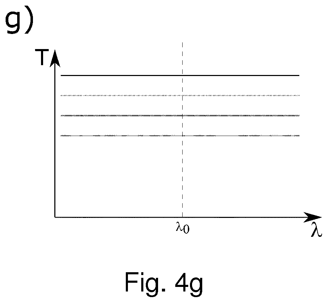

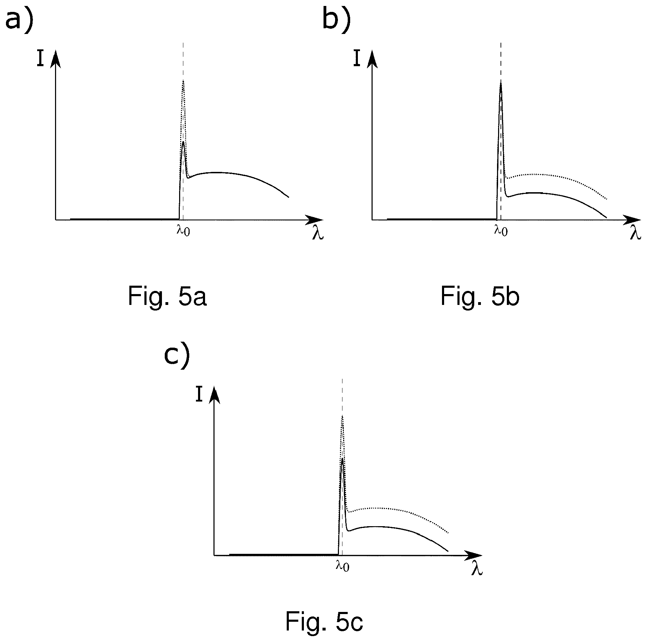

In der Praxis ist es notwendig, die Strahlintensität an unterschiedliche Proben anzupassen, da die spektrale Intensitätsverteilung im Wesentlichen durch den verwendeten Laser 1 und die Photonische-Kristall-Faser 2 vorgegeben wird. Mit Hilfe weiterer Optiken, kann die relative Intensität zwischen fundamentaler Wellenlänge λ₀ und dem Weißlichtspektrum, aber auch die absolute Intensität wellenlängenunabhängig variieren werden. In einer Ausführung (Fig. 2c) der erfindungsmäßigen Vorrichtung A zur Lichtbereitstellung zur kohärenten Anti-Stokes Raman-Spektroskopie, die eine Variation der spektralen Intensitäten erlaubt, umfasst die Kombination optischer Elemente 4 einen Kollimator 14 zur Kollimation des aus der Photonische-Kristall-Faser 2 austretenden Sekundärstrahls 3, welcher eine spektrale Verteilung wie in Fig. 3a schematisch dargestellt aufweist, einen Langpass-Kantenfilter 15 als spektralen Kantenfilter, der so ausgewählt ist, dass nur die fundamentale Wellenlänge λ₀ und größere Wellenlängen transmittiert werden und der transmittierte Strahl eine spektralen Verteilung wie in der Abbildung Fig. 3b aufweist, und einen spektralen Intensitätsmanipulator 17. Der Intensitätsmanipulator 17 kann eine beliebige Kombination von Filtern, diffraktiven und refraktiven Elementen wie Gittern, Prismen oder Grisms in Verbindung mit geometrischen statisch oder dynamischen Masken oder Spiegeln umfassen. Eine mögliche Ausführung in Form dreier Filterräder 18,19, 20 ist exemplarisch in Fig. 2c zusätzlich gezeigt. Im Filterrad 18 befinden sich verschiedene Notch-Filter (Transmissionsverhalten wie in Fig. 4c) oder Langpass-Kantenfilter (Transmissionsverhalten wie in Fig. 4e), die so gewählt sind, dass die Intensität bei der fundamentalen Wellenlänge λ₀ abhängig vom verwendeten Filter um einen gewissen Prozentsatz relativ zum Weißlichtspektrum abgeschwächt wird und sich die spektrale Verteilung wie in Fig. 5a dargestellt ändert. Im Bandfilter-Filterrad 19 befinden sich verschiedene BandFilter (Transmissionsverhalten wie in Fig. 4d) oder Kurzpass-Kantenfilter (Transmissionsverhalten wie in Fig. 4f), die so gewählt sind, dass die Intensität des Weißlichtspektrums abhängig vom verwendeten Filter um einen gewissen Prozentsatz relativ zur Intensität bei der fundamentalen Wellenlänge λ₀ abgeschwächt wird und die spektrale Verteilung sich wie in Fig. 5b dargestellt ändert. Im Graufilter-Filterrad 20 befinden sich verschiedene Grau-Filter (Transmissionsverhalten wie in Fig. 4g), die das gesamte Spektrum unabhängig von der Wellenlänge, abhängig vom verwendeten Filter um einen gewissen Prozentsatz abschwächen so dass sich die spektrale Verteilung wie in Fig. 5c dargestellt ändert. Hierbei können die Filterräder 18,19,20 in beliebiger Reihenfolge und beliebiger Kombination in den Strahlengang eingebracht werden. Auch ist es möglich über entsprechende Wahl der Filter in den Filterrädern 18 und 19 die Funktion der Graufilter im Graufilter-Filterrad 20 zu übernehmen. Bei geeigneter Wahl des Filters im Filterrad 18 kann auf Filter 15 verzichtet werden. Außerdem empfiehlt es sich in jedem Filterrad eine Position ohne Filter zu besetzen, um die Möglichkeit zu gewährleisten, die Intensitätsverteilung des Tertiärstrahls 5 unverändert zu belassen. Ein Vertauschen der Position des spektralen Intensitätsmanipulators 17 mit denen von Kollimator 14 und Filter 15 im Strahlengang ist möglich. Der aus der Kombination optischer Elemente 4 austretende Tertiärstrahl 5 ist für CARS geeignet und hat immer noch eine spektrale Form wie schematisch in Fig. 3b dargestellt.

In der Praxis ist es notwendig, die Polarisation des CARS-Anregungslichts gezielt zu manipulieren, um Auswahlregeln für den CARS-Prozess in der Probe ausnutzen zu können. In einer Ausführung (Fig. 2d) der erfindungsmäßigen Vorrichtung A zur Lichtbereitstellung zur kohärenten Anti-Stokes Raman-Spektroskopie, die eine Manipulation der Polarisation des Tertiärstrahls 5 erlaubt, umfasst die Kombination optischer Elemente 4 einen Kollimator 14 zur Kollimation des aus der Photonische-Kristall-Faser 2 austretenden Sekundärstrahls 3, welcher eine spektrale Verteilung wie in Fig. 3a schematisch dargestellt aufweist, einen spektralen Filter 15 als Langpass-Filter, der so ausgewählt ist, dass nur die fundamentale Wellenlänge λ₀ und größere Wellenlängen transmittiert werden wobei der transmittierte Strahl eine spektralen Verteilung wie in der Abbildung Fig. 3b aufweist, und einen Polarisationsmanipulator 21. Mögliche Polarisationsmanipulatoren sind einfache Elemente wie lineare Polarisatoren, λ/4- oder λ/2-Plättchen, Wellenplatten, Spektralapparate oder Kombinationen aus solchen oder auch Kombinationen mit anderen optischen Elementen. Ist der Polarisationsmanipulator 21 beispielsweise ein einfacher linearer Polarisator, dann ist der Tertiärstrahl 5 dadurch linear polarisiert. Durch Wahl der Polarisatoreinstellung lässt sich in diesem Fall die Polarisationsrichtung des Tertiärstrahls 5 in der Ebene senkrecht zur Ausbreitungsrichtung des Tertiärstrahls 5 beliebig einstellen. Allgemein lässt sich mit dem Polarisationsmanipulator bei Erhalt spektrale Form des Tertiärstrahls 5 wie schematisch in Fig. 3b dargestellt dessen spektrale Polarisationsverteilung beliebig manipulieren. Prinzipiell sind die Positionen des Kollimators 14, des Filters 15 und des Polarisationsmanipulators 21 im Strahlengang vertauschbar. Bei geeigneter Wahl des Polarisationsmanipulators kann der Filter 15 entfallen.

In einer weiteren Ausführung können die in Fig. 2c und Fig. 2d dargestellten Ausführungen unter Weglassung der gedoppelten Elemente in einem Strahlengang kombiniert werden. Sowohl die in Fig. 2c als auch die in Fig. 2d dargestellte Ausführung sowie ihre Kombination können statt in Transmission wie beschrieben auch für Reflexion (wie in der in Fig. 2b dargestellten Ausführung) aufgebaut werden.

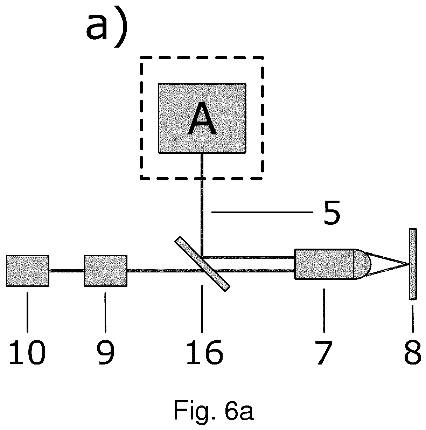

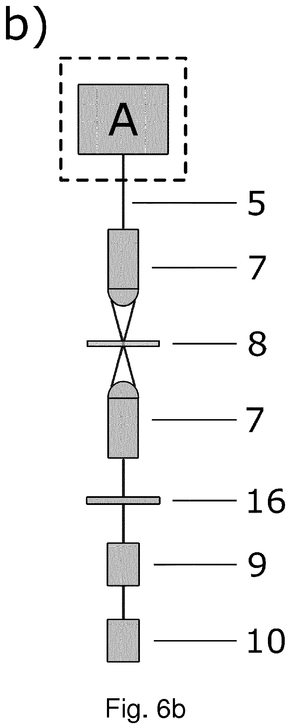

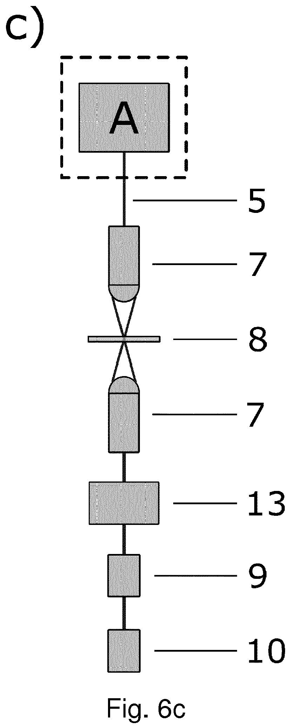

Der in obigen Ausführungen von Vorrichtung A oder Abwandlungen derselben gemäß obigem Absatz generierte Tertiärstrahl 5 kann durch einfache optische Elemente (bspw. Umlenkspiegel oder Prismen) in Messaufbauten für CARS-Messungen in Transmission (siehe Fig. 6a) wie auch in Reflexion (siehe Abbildungen Fig. 6b und Fig. 6c) eingekoppelt werden.

Der Vorteil der einfachen Handhabbarkeit des zur Anregung eines CARS-Prozesses geeigneten, von Vorrichtung A erzeugten Tertiärstrahls 5 bedingt sich durch den erfindungsmäßigen Erzeugungsprozess. Die Bereitstellung des Tertiärstrahls 5 das neben dem Superkontinuum bzw. weißem Laserlicht ebenfalls Laserlicht mit der ursprünglichen fundamentalen Wellenlänge λ₀ umfasst, wird dadurch ermöglicht, dass eine Photonische-Kristall-Faser 2 eingesetzt wird. Die nicht-vollständige Konversion der Fundamentalen der Lichtquelle 1 in der Photonische-Kristall-Faser 2 führt dazu, dass das aus dieser Faser ausgekoppelte Licht eine räumlich und zeitlich kohärente Überlagerung der Fundamentalen und des Weißlichtspektrums darstellt. Nach Passieren einer Kombination optischer Elemente 4, die die zeitlich und räumliche Kohärenz erhält und zusätzlich die spektrale Form von der in Fig. 3a schematisch dargestellten in die in der Abbildung Fig. 3b schematisch dargestellte überführt, erhält man einen kohärenten Tertiärstrahl 5, der direkt zur CARS-Messung genutzt werden kann. Dabei sind die Bestandteile vom in der Photonische-Kristall-Faser 2 generierten Weißlicht und von der Fundamentalen des Lichtquelle 1 im Tertiärstrahl 5 intrinsisch kohärent.

Der Vorteil einer Vorrichtung mit Weißlicht gegenüber Vorrichtungen mit einem durchstimmbaren Laser liegt ebenfalls in ihrer Einfachheit. So nimmt man an, dass durch das kontinuierliche Weißlichtspektrum in jeder zu untersuchenden Probe Schwingungsmoden gleichermaßen resonant angeregt werden können unabhängig vom Modenspektrum der Probe. Hierdurch entfällt die Suche nach der am besten geeigneten Stokes-Wellenlänge.

Dieser Ansatz sorgt dafür, dass Optiken zur räumlichen und zeitlichen Überlagerung der Strahlen der verschiedenen Laser in der Probe (Pump- und Stokes-Strahl durch zwei unabhängige Lasersysteme zur Verfügung gestellt bzw. Pump- und Stokes-Strahl generiert durch räumliches Abspalten eines Teils des Pumplaserlichts zur Generierung des Stokes-Strahls) verzichtbar sind, was zu einem kompakten, kostengünstigen und einfach zu justierenden Aufbau führt, der ohne aufwändig zu justierende Optiken auskommt. Dies macht Vorrichtungen für eine Lichtquelle zur kohärenten Anti-Stokes Raman-Spektroskopie nicht nur deutlich kostengünstiger, sondern ermöglicht es einem breiteren Personenkreis diese Methode zu verwenden, für die vorher Fachpersonal für den Betrieb der Apparaturen insbesondere für deren Justage nötig war. Das bedeutet, dass die erfindungsgemäße Vorrichtung den Einsatz von CARS als eine Standard-Methode erheblich erleichtert, auch da Vorrichtung A in allen Ausführungen in ein bestehendes Raman-System analog zu einem weiteren Laser integriert werden kann. Es handelt sich um eine Vorrichtung, die als Plug-and-Play Lösung verstanden werden kann, wodurch eine industrielle und routinemäßige Anwendung ermöglicht wird.

### Ablauf der Strahlerzeugung und Integration in CARS-Messapparaturen

Zunächst wird durch die Lichtquelle 1 ein Primärstrahl mit einer fundamentalen Wellenlänge λ₀ erzeugt. Dieser Primärstrahl ist spektral schmalbandig. Dieser wird in eine Photonische-Kristall-Faser 2 geleitet. Innerhalb dieser Photonische-Kristall-Faser 2 wird ein gewisser Anteil des Lichts der ursprünglichen fundamentalen Wellenlänge λ₀ über nichtlineare Effekte in ein Superkontinuum überführt. Der aus der Photonische-Kristall-Faser 2 austretende Sekundärstrahl 3 weist schematisch die in der Abbildung Fig. 3a dargestellte spektrale Verteilung auf. Mit Hilfe der Kombination optischer Elemente 4 wird der Sekundärstrahl 3 unter Beibehaltung seiner zeitlichen und räumlichen Kohärenz weiter spektral geformt und kollimiert. Der die Vorrichtung A verlassende Tertiärstrahl 5 ist dann zeitlich und räumlich kohärent, kollimiert und weist die spektrale Form auf, die schematisch in der Abbildung Fig. 3b dargestellt ist.

In einer möglichen Ausführungsform der erfindungsgemäßen Vorrichtung A (Fig. 2a) umfasst die Kombination optischer Elemente 4 wenigstens einen Kollimator 14 und einen Langpass-Filter 15.

In dieser Ausführungsform der erfindungsgemäßen Vorrichtung A durchläuft der Sekundärstrahl 3 die Kombination optischer Elemente 4, die den Kollimator 14 und Langpass-Filter 15 umfasst. Der Kollimator 14 kollimiert den Sekundärstrahl 3, während der Langpass-Filter die spektrale Form ändert. Hierzu weist die spektrale Response des Kantenfilters einen möglichst kleinen spektralen Übergangsbereich (typischer Weise im Bereich von <100 cm⁻¹) zwischen Wellenlängen, die transmittiert bzw. reflektiert werden auf, die derart gewählt ist, dass nur die fundamentale Wellenlänge λ₀ und größere Wellenlängen den Kantenfilter passieren können (Transmissionsverhalten wie in Fig. 4a). Kürzere Wellenlängen werden hingegen durch Reflexion oder Absorption geblockt. Man erhält somit den durch den Kantenfilter transmittierten Tertiärstrahl 5, der zeitlich und räumlich kohärent und kollimiert ist und die spektrale Form aufweist, die schematisch in der Abbildung Fig. 3b dargestellt ist.

In einer alternativen Ausführungsform der erfindungsgemäßen Vorrichtung A (Fig. 2b) umfasst die Kombination optischer Elemente 4 wenigstens einen Kollimator 14 und einen Kurzpassfilter-Filter 16.

In dieser Ausführungsform (siehe Abbildung Fig. 2b) wird der Sekundärstrahl 3 nach Durchgang durch den Kollimator 14 anschließend am Kurzpass-Filter 16 reflektiert. Dieser weist einen möglichst kleinen spektralen Übergangsbereich (typischer Weise im Bereich von <100 cm⁻¹) zwischen Wellenlängen, die transmittiert bzw. reflektiert werden auf und ist derart gewählt, dass nur die fundamentale Wellenlänge λ₀ und größere Wellenlängen reflektiert werden können (Transmissionsverhalten wie in Fig. 4b). Kürzere Wellenlängen werden transmittiert oder absorbiert. Man erhält somit den am Kantenfilter reflektierten Tertiärstrahl 5, der zeitlich und räumlich kohärent und kollimiert ist und die spektrale Form aufweist, die schematisch in der Abbildung Fig. 3b dargestellt ist.

Diese Ausführungsformen können auch kombiniert werden. Dabei können die Positionen der Bauelemente 14 und 15 bzw. 16 vertauscht sein. Ebenso können zusätzliche optische Elemente in der Kombination optischer Elemente 4 enthalten sein oder schon enthaltene ersetzen, die den aus der Photonische-Kristall-Faser 2 austretenden Sekundärstrahl 3 in seiner spektralen Form (Fig. 3a) in den kollimierten Tertiärstrahl 5 der spektralen Form (Fig. 3b) unter Erhalt des intrinsischen zeitlichen und räumlichen kohärenten Überlappung der beiden Bestandteile des aus der Photonische-Kristall-Faser austretenden Lichts, Fundamentale und Weißlichtanteil, überführen. Bspw. kann ein Pulsformer mit Gittern, Prismen oder Grisms zur spektralen Formung eingesetzt werden. Dieser kann mittels Freistrahloptik oder integriert ausgelegt sein. Ebenso kann mit den in Fig. 2c und Fig. 2d exemplarisch beschriebenen Ausführungsbeispielen oder Kombinationen und Abwandlungen derselben die spektrale Intensitäts- und Polarisationsverteilung des Tertiärstrahls 5 gezielt eingestellt werden.

Der kollimierte Tertiärstrahl 5 kann unabhängig von der Ausführungsform, mit der er erzeugt wurde, als Anregungslicht zur Durchführung einer CARS-Messung genutzt werden.

### Ausführungsbeispiele für den Einsatz der Vorrichtung A in CARS-Messapparaturen

Ein möglicher Messaufbau zur kohärenten Anti-Stokes Raman-Spektroskopie in einer **Reflexions-Geometrie** ist in Fig. 6a dargestellt. Hierbei wird der kollimierte Tertiärstrahl 5, der in einer Ausführungsform der Vorrichtung A generiert wurde, unter einem Einfallswinkel von 45° auf einen Kurzpass-Kantenfilter 16 geleitet, dessen Filterkante so gewählt ist, dass die fundamentale Wellenlänge λ₀ und größere Wellenlängen unter einem Winkel von 90° reflektiert werden. Die spektrale Intensitätsverteilung des Strahls nach dieser Reflexion entspricht noch immer der in der Abbildung Fig. 3b dargestellten. Der Strahl wird anschließend über ein Mikroskopobjektiv 7 auf die Probe 8 fokussiert, um sowohl die elektrische Feldstärke im Fokuspunkt wie auch die laterale Auflösung des Systems zu erhöhen. An bzw. in der Probe 8 findet der beschriebene CARS-Prozess mit den Schwingungsmoden der Probe statt, so dass das von der Probe reflektierte Licht eine spektrale Intensitätsverteilung aufweist, wie sie in der Abbildung Fig. 3c dargestellt ist. Hierbei stellen die Intensitätsmaxima links neben der fundamentalen Wellenlänge λ₀ das Anti-Stokes Raman-Spektrum dar. Das Streulicht wird anschließend mit dem Mikroskopobjektiv 7 gesammelt und wiederum unter einem Winkel von 45° auf den Kurzpass-Kantenfilter 16 geleitet. Wie zuvor werden die fundamentale Wellenlänge λ₀ und größere Wellenlängen an diesem Filter unter einem Winkel von 90° reflektiert. Kürzere Wellenlängen als die fundamentale Wellenlänge λ₀ und damit das Anti-Stokes Raman-Spektrum können den Filter allerdings passieren. Somit erhält man Restlicht mit der in der Abbildung Fig. 3d dargestellten spektralen Intensitätsverteilung. Dieses Restlicht kann dann abschließend nach einem Element zur spektralen Aufspaltung 9 (bspw. mit einem Gitter oder Prisma) mit einem Detektor 10 (bspw. CCD) analysiert werden, um das entsprechende Anti-Stokes Raman-Spektrum zu erhalten.

Ein möglicher Messaufbau zur kohärenten Anti-Stokes Raman-Spektroskopie in einer **Transmissions-Geometrie** ist in der Abbildung Fig. 6b dargestellt. Hierbei wird der kollimierte Tertiärstrahl 5, der in der Vorrichtung A generiert wird, über ein Mikroskopobjektiv 7 auf die Probe 8 fokussiert, um sowohl die elektrische Feldstärke im Fokuspunkt wie auch die laterale Auflösung des Systems zu erhöhen. An bzw. in der Probe 8 findet der beschriebene CARS-Prozess mit den Schwingungsmoden der Probe statt, so dass das durch die Probe transmittierte Licht (in dieser Geometrie ist man auf transparente bzw. sehr dünne Proben beschränkt) eine spektrale Intensitätsverteilung aufweist, wie sie in Fig. 3c dargestellt ist. Hierbei stellen die Intensitätsmaxima links neben der fundamentalen Wellenlänge λ₀ das Anti-Stokes Raman-Spektrum dar. Das Streulicht wird anschließend mittels des Mikroskopobjektivs 7 gesammelt und auf den Kurzpass-Kantenfilter 16 geleitet. Die fundamentale Wellenlänge λ₀ und größere Wellenlängen werden an diesem Filter reflektiert. Kürzere Wellenlängen als die fundamentale Wellenlänge λ₀ und damit das Anti-Stokes Raman-Spektrum können den Filter allerdings passieren. Somit erhält man Restlicht mit der in der Abbildung Fig. 3d dargestellten spektralen Intensitätsverteilung. Dieses Restlicht kann dann abschließend nach einem Element zur spektralen Aufspaltung 9 (bspw. mit einem Gitter oder Prisma) mit einem Detektor 10 (bspw. CCD) analysiert werden, um das entsprechende Anti-Stokes Raman-Spektrum zu erhalten. Der Vorteil des Filters 12 liegt in dessen Kompaktheit.

Ein weiterer möglicher Messaufbau zur kohärenten Anti-Stokes Raman-Spektroskopie in einer **Transmissions-Geometrie** ist in Fig. 6c dargestellt. Hierbei wird der kollimierte Tertiärstrahl 5, der in der Vorrichtung A generiert wird, über ein Mikroskopobjektiv 7 auf die Probe 8 fokussiert, um sowohl die elektrische Feldstärke im Fokuspunkt wie auch die laterale Auflösung des Systems zu erhöhen. An bzw. in der Probe 8 findet der beschriebene CARS-Prozess mit den Schwingungsmoden der Probe statt, so dass das durch die Probe transmittierte Licht (in dieser Geometrie ist man auf transparente bzw. sehr dünne Proben beschränkt) eine spektrale Intensitätsverteilung aufweist, wie sie in Fig. 3c dargestellt ist. Hierbei stellen die Intensitätsmaxima links neben der fundamentalen Wellenlänge λ₀ das Anti-Stokes Raman-Spektrum dar. Das gestreute Licht wird anschließend mittels des Mikroskopobjektivs 7 "eingesammelt" und in ein Multi-Spektrometersystem mit Detektionseinheit 13 geleitet. Dieses Multi-Spektrometersystem mit Detektionseinheit kann bspw. aus einem als Bandfilter agierenden, subtraktiven Doppel-Spektrometer mit nachgeschaltetem Einfachspektrometer mit Detektoreinheit (Vielkanal- oder Einkanal-Detektor) bestehen. Das subtraktive Doppelspektrometer ist durch Rotation der eingebauten Gitter so eingestellt, dass das Transmissions-Band gerade die fundamentale Wellenlänge λ₀ und größere Wellenlängen nicht mehr beinhaltet. Kürzere Wellenlängen als die fundamentale Wellenlänge λ₀ und damit das Anti-Stokes Raman-Spektrum liegen innerhalb des Transmissionsbandes des subtraktiven Doppelspektrometers. Somit erhält man Restlicht mit der in der Abbildung Fig. 3d dargestellten spektralen Intensitätsverteilung. Dieses Restlicht kann dann abschließend über das Einfachspektrometer mit CCD analysiert werden, um das entsprechende Anti-Stokes Raman-Spektrum zu erhalten. Der Vorteil des subtraktiven Doppelspektrometers liegt darin, dass der Transmissionsbereich so eingestellt werden kann, dass er dichter an die fundamentale Wellenlänge λ₀ reicht, als dies im Falle eines Kantenfilters möglich wäre. Allerdings büßt man durch ein subtraktives Doppelspektrometer Kompaktheit ein. Statt des Doppelspektrometers mit nachgeschaltetem Einfachspektrometer mit Detektor als Detektionseinheit 13 kann man auch additiv arbeitende Multi-Spektrometersysteme (Doppel- oder Tripelspektrometer) mit Detektor einsetzen. In diesen ist die spektrale Auflösung so groß, dass das Anti-Stokes Raman-Spektrum auch detektiert werden kann, wenn das ins Spektrometer fallende Licht eine spektrale Verteilung wie in der Abbildung Fig. 3c gezeigt, besitzt, d.h. Fundamentale und Weißlicht bei längeren Wellenlängen als die der Fundamentalen noch nicht herausgefiltert sind.

### Abbildungslegenden und Bezugszeichenliste

**Fig. 1** zeigt eine schematische Darstellung der erfindungsgemäßen Vorrichtung A für eine Lichtquelle zur kohärenten Anti-Stokes Raman-Spektroskopie.
**Fig. 2a** zeigt ein Ausführungsbeispiel der erfindungsgemäßen Vorrichtung A, in der die Kombination der optischen Elemente zur spektralen Formung des aus der Photonische-Kristall-Faser 2 austretenden Sekundärstrahls 3 unter Erhalt der zeitlich und räumlichen Kohärenz der spektralen Komponenten der Fundamentalen von Lichtquelle 1 und dem langwelligen Anteil des in der Photonische-Kristall-Faser 2 erzeugten Weißlichtspektrums erhalten bleiben. Die Kombination der optischen Elemente 4 besteht aus einem Kollimator 14 und einem Langpass-Filter 15. Den Tertiärstrahl 5, der sich zur Anregung des CARS-Prozesses eignet, erhält man als durch den Filter transmittierten Tertiärstrahl 5.
**Fig. 2b** zeigt ein Ausführungsbeispiel der erfindungsgemäßen Vorrichtung A, in der die Kombination der optischen Elemente zur spektralen Formung des aus der Photonische-Kristall-Faser 2 austretenden Sekundärstrahl 3 unter Erhalt der zeitlich und räumlichen Kohärenz der spektralen Komponenten der Fundamentalen von Laser 1 und dem langwelligen Anteil des in der Photonische-Kristall-Faser erzeugten Weißlichtspektrums erhalten bleiben. Die Kombination der optischen Elemente 4 besteht aus einem Kollimator 14 und einem Kurzpass-Filter 16. Den Tertiärstrahl 5, der sich zur Anregung des CARS-Prozesses eignet, erhält man als am Filter reflektierten Tertiärstrahl 5.
**Fig. 2c** zeigt ein Ausführungsbeispiel der erfindungsgemäßen Vorrichtung A, in der die Kombination der optischen Elemente zur spektralen Formung des aus der Photonische-Kristall-Faser 2 austretenden Sekundärstrahl 3 unter Erhalt der zeitlich und räumlichen Kohärenz der spektralen Komponenten der Fundamentalen von Laser 1 und dem langwelligen Anteil des in der Photonische-Kristall-Faser erzeugten Weißlichtspektrums erhalten bleiben. Die Kombination der optischen Elemente 4 besteht aus einem Kollimator 14 und einem Langpass-Filter 15 und einem spektralen Intensitätsmanipulator 17. Den Tertiärstrahl 5, der sich zur Anregung des CARS-Prozesses eignet, erhält man als am Filter reflektierten Tertiärstrahl 5. Mit Hilfe des spektralen Intensitätsmanipulators 17 lässt sich dessen spektrale Intensitätsverteilung gezielt einstellen. Der spektrale Intensitätsmanipulator 17 kann beispielsweise in einer Ausführungsform eine Kombination dreier Filterräder 18,19,20 sein.
**Fig. 2d** zeigt ein Ausführungsbeispiel der erfindungsgemäßen Vorrichtung A, in der die Kombination der optischen Elemente zur spektralen Formung des aus der Photonische-Kristall-Faser 2 austretenden Sekundärstrahl 3 unter Erhalt der zeitlich und räumlichen Kohärenz der spektralen Komponenten der Fundamentalen von Laser 1 und dem langwelligen Anteil des in der Photonische-Kristall-Faser erzeugten Weißlichtspektrums erhalten bleiben. Die Kombination der optischen Elemente 4 besteht aus einem Kollimator 14 und einem Langpass-Filter 15 und einem Polarisationsmanipulator 21. Den Tertiärstrahl 5, der sich zur Anregung des CARS-Prozesses eignet, erhält man als am Filter reflektierten Tertiärstrahl 5. Mit Hilfe der Polarisationsmanipulators 21 lässt sich dessen spektrale Polarisationsverteilung gezielt einstellen.
**Fig. 3a** zeigt eine schematische Darstellung des Wellenlängenspektrums des von der Photonische-Kristall-Faser 2 emittierten Lichts. λ₀ ist dabei die fundamentale Emissionswellenlänge des Lichtquelle 1.
**Fig. 3b** zeigt eine schematische Darstellung des Wellenlängenspektrums des Tertiärstrahls 5 nach Passieren der Kombination optischer Elemente 4 zur spektralen Formung unter Erhalt der zeitlichen und räumlichen Kohärenz der spektralen Anteile. λ₀ ist dabei die fundamentale Emissionswellenlänge des Lichtquelle1.
**Fig. 3c** zeigt eine schematische Darstellung des Wellenlängenspektrums des von der Probe kommenden Lichts nach Interaktion der Probe 8 mit dem Tertiärstrahl 5. λ₀ ist dabei die fundamentale Emissionswellenlänge des Lichtquelle 1.
**Fig. 3d** zeigt schematische Darstellung des Wellenlängenspektrums des Restlichts (Anti-Stokes Raman-Spektrum) des von der Probe kommenden Lichts nach Interaktion der Probe 8 mit dem kollimierten Tertiärstrahl 5 und nach Passieren des Kantenfilters 16 in Fig. 6a, nach Passieren des Kantenfilters 16 in Fig. 6b oder nach Passieren eines Doppelspektrometers als Teil der Detektionseinheit 13 gemäß Fig. 6c.
**Fig. 4a** zeigt schematisch das Transmissionsprofil eines Langpass-Kantenfilters, der so gewählt ist, dass die fundamentale Wellenlänge λ₀ gerade noch geblockt wird.
**Fig. 4b** zeigt schematisch das Transmissionsprofil eines Kurzpass-Kantenfilters, der so gewählt ist, dass die fundamentale Wellenlänge λ₀ gerade noch transmittiert wird.
**Fig. 4c** zeigt schematisch die Transmissionsprofile von Notchfiltern, wie sie im Filterrad 18 verwendet werden könnten. Hierbei sind die Filter so gewählt, dass nur ein schmaler Bereich um die fundamentale Wellenlänge λ₀ unterschiedlich stark geblockt wird. Die übrigen Wellenlängen werden annähernd vollständig transmittiert.
**Fig. 4d** zeigt schematisch die Transmissionsprofile von Bandfiltern, wie sie im Bandfilter-Filterrad 19 verwendet werden könnten. Hierbei sind die Filter so gewählt, dass nur ein schmaler Bereich um die fundamentale Wellenlänge λ₀ annähernd vollständig transmittiert wird. Die übrigen Wellenlängen werden je nach verwendetem Filter unterschiedlich stark geblockt.
**Fig. 4e** zeigt schematisch die Transmissionsprofile von Langpass-Kantenfiltern, wie sie im Filterrad 18 verwendet werden könnten. Hierbei sind die Filter so gewählt, dass nur die fundamentale Wellenlänge λ₀ und kleinere Wellenlängen unterschiedlich stark geblockt werden. Größere Wellenlängen werden annähernd vollständig transmittiert.
**Fig. 4f** zeigt schematisch die Transmissionsprofile von Kurzpass-Kantenfiltern, wie sie im Bandfilter-Filterrad 19 verwendet werden könnten. Hierbei sind die Filter so gewählt, dass nur die fundamentale Wellenlänge λ₀ und kleinere Wellenlängen annähernd vollständig transmittiert werden. Größere Wellenlängen werden je nach verwendetem Filter unterschiedlich stark geblockt.
**Fig. 4g** zeigt schematisch die Transmissionsprofile von Graufiltern, wie sie im Graufilter-Filterrad 20 verwendet werden könnten. Graufilter zeigen idealer Weise Dispersion. Das bedeutet das unterschiedliche Filter das Spektrum unterschiedlich stark, aber unabhängig von der Wellenlänge abschwächen.
**Fig. 5a** zeigt eine schematische Darstellung eines möglichen Wellenlängenspektrums des Tertiärstrahls 5 vor (gestrichelte Linie) und nach (durchgezogene Linie) Passieren des Filterrads 18. Hierbei wurde die Intensität der fundamentalen Wellenlänge λ₀ im Gegensatz zu jener des Weißlichtspektrums abgeschwächt.
**Fig. 5b** zeigt eine schematische Darstellung eines möglichen Wellenlängenspektrums des Tertiärstrahls 5 vor (gestrichelte Linie) und nach (durchgezogene Linie) Passieren des Bandfilter-Filterrad 19. Hierbei wurde die Intensität des Weißlichtspektrums im Gegensatz zu jener der fundamentalen Wellenlänge λ₀ abgeschwächt.
**Fig. 5c** zeigt eine schematische Darstellung eines möglichen Wellenlängenspektrums des Tertiärstrahls 5 vor (gestrichelte Linie) und nach (durchgezogene Linie) Passieren des Graufilter-Filterrads 20. Hierbei wurde die Intensität des Weißlichtspektrums und jene der fundamentalen Wellenlänge λ₀ gleichermaßen abgeschwächt.
**Fig. 6a** zeigt eine schematische Darstellung eines Messaufbaus zur kohärenten Anti-Stokes Raman-Spektroskopie in Reflexions-Geometrie, in welche die Vorrichtung A integriert ist.
**Fig. 6b** zeigt eine schematische Darstellung eines Messaufbaus zur kohärenten Anti-Stokes Raman-Spektroskopie in Transmissions-Geometrie, in welche die Vorrichtung A integriert ist. Dieser Aufbau beinhaltet einen Kurzpass Kantenfilter 16.
**Fig. 6c** zeigt eine schematische Darstellung eines Messaufbaus zur kohärenten Anti-Stokes Raman-Spektroskopie in Transmissions-Geometrie, in welche die Vorrichtung A integriert ist. Dieser Aufbau beinhaltet eine Detektionseinheit 13.

**Bezugszeichen**:
- A: Vorrichtung zur Lichtbereitstellung zur kohärenten Anti-Stokes Raman-Spektroskopie
- 1: Lichtquelle
- 2: Photonische-Kristall-Faser (PCF photonic crystal fibre)
- 3: Sekundärstrahl mit dem in Fig. 3a dargestellten Wellenlängenspektrum
- 4: Kombination optischer Elemente
- 5: Tertiärstrahl mit dem in Fig. 3b dargestellten Wellenlängenspektrum
- 7: Mikroskopobjektiv
- 8: Probe
- 9: Element zur spektralen Aufspaltung
- 10: Detektor
- 13: Detektionseinheit aus Multi-Spektrometersystem mit Detektor
- 14: Kollimator
- 15: Langpass-Kantenfilter mit einem in Fig. 4a dargestellten Transmissionsprofil
- 16: Kurzpass-Kantenfilter mit einem in Fig. 4b dargestellten Transmissionsprofil
- 17: spektraler Intensitätsmanipulator
- 18: Filterrad mit Notchfiltern oder Langpass-Kantenfiltern verschiedener optischer Dichten im blockenden Bereich mit dem in Fig. 4c bzw. 4e dargestellten Transmissionsprofilen
- 19: Bandfilter-Filterrad mit Bandfiltern oder Kurzpass-Kantenfiltern verschiedener optischer Dichten im blockenden Bereich mit dem in Fig. 4d bzw. 4f dargestellten Transmissionsprofilen
- 20: Graufilter-Filterrad mit Graufiltern verschiedener optischer Dichten mit dem in Fig. 4g dargestellten Transmissionsprofilen
- 21: Polarisationsmanipulator

## Patentansprüche

1. Vorrichtung A zur Lichtbereitstellung zur kohärenten Anti-Stokes Raman-Spektroskopie umfassend
• Lichtquelle 1, welche so ausgebildet ist, dass sie einen Primärstrahl mit einer fundamentalen (Zentral-) Wellenlänge λ₀ emittieren kann
• eine Photonische-Kristall-Faser (PCF photonic crystal fibre) 2, welche so ausgebildet ist, dass der Primärstrahl diese passieren kann und ein Sekundärstrahl 3 emittiert wird
• eine Kombination optischer Elemente 4, welche so ausgebildet ist, dass sie den aus der Photonischen-Kristall-Faser 2 austretenden Sekundärstrahl 3 unter Beibehaltung seiner intrinsischen zeitlichen und räumlichen Kohärenz so kollimiert und so spektral in Intensität und Polarisation formen kann, dass ein Tertiärstrahl 5 resultieren kann, der eine kohärente Überlagerung des Primärstrahls bei der fundamentalen Wellenlänge (λ₀) mit dem Sekundärstrahl 3 mit dem langwelligeren Anteil (λ > λ₀) des Superkontinuum bzw. weißen Laserlichts bildet
**dadurch gekennzeichnet, dass** die Photonische-Kristall-Faser (PCF photonic crystal fibre) 2 so ausgebildet ist, dass das Spektrum des Primärstrahls, beim Passieren der Photonische-Kristall-Faser 2 so modifiziert wird, dass es zu einer spektralen Aufweitung des Spektrums des Primärstrahl kommt, sodass ein Superkontinuum bzw. weißes Laserlicht entsteht, wobei der resultierende Sekundärstrahl 3 bei der fundamentalen Wellenlänge intrinsisch zeitlich und räumlich kohärent das Licht des Primärstrahls überlagern kann und so nach weiterer spektraler Formung in Intensität und Polarisation durch die Kombination optischer Elemente 4 als Anregungslicht für CARS-Prozesse ausgekoppelt werden kann.

2. Vorrichtung A zur Lichtbereitstellung zur kohärenten Anti-Stokes Raman-Spektroskopie gemäß Anspruch 1, **dadurch gekennzeichnet, dass** die Kombination optischer Elemente 4 wenigstens einen Kollimator 14 und einen Langpass-Kantenfilter 15 umfasst.

3. Vorrichtung A zur Lichtbereitstellung zur kohärenten Anti-Stokes Raman-Spektroskopie gemäß Anspruch 1 oder 2, **dadurch gekennzeichnet, dass** die Kombination optischer Elemente 4 wenigstens einen Kollimator 14 und einen Kurzpass-Kantenfilter 16 umfasst.

4. Vorrichtung A zur Lichtbereitstellung zur kohärenten Anti-Stokes Raman-Spektroskopie gemäß einem der vorigen Ansprüche, **dadurch gekennzeichnet, dass** die Kombination optischer Elemente 4 wenigstens einen Kollimator 14 und einen spektralen Intensitätsmanipulator 17 umfasst.

5. Vorrichtung (A) zur Lichtbereitstellung zur kohärenten Anti-Stokes Raman-Spektroskopie gemäß einem der vorigen Ansprüche, **dadurch gekennzeichnet, dass** die Kombination optischer Elemente 4 wenigstens einen Kollimator 14 und einen Polarisationsmanipulator 21 umfasst.

6. Verwendung der Vorrichtung A gemäß einem der vorigen Ansprüche zur Durchführung einer CARS-Messung.
